# EUROPEAN PATENT APPLICATION

(11) **EP 2 894 912 A1**
(43) Date of publication of application: **15.07.2015**
(21) Application number: 13835381.8
(22) Date of filing: 27.08.2013
(51) Int. Cl.: H04W 60/00

(54) **METHOD AND APPARATUS FOR GATEWAY MANAGEMENT TERMINAL**

(30) Priority: 05.09.2012 CN 201210325394
(71) Applicant: ZTE Corporation, Shenzhen, Guangdong 518057 (CN)
(72) Inventor: WU, Hao, Shenzhen Guangdong 518057 (CN); XIE, Fang, Shenzhen Guangdong 518057 (CN)
(74) Representative: Bongiovanni, Simone
(86) International application number: PCT/CN2013/082379
(87) International publication number: WO 2014/036902

(57) **Abstract**

A method and a device for a gateway managing terminal are disclosed. The method comprises that: a Machine To Machine (M2M) gateway transmits an information request message to an M2M terminal requiring registration; and after the M2M gateway receives a message transmitted by the M2M terminal and responding to the information request message, the M2M gateway authenticates and verifies the M2M terminal. In the present invention, by registering the M2M terminal on the M2M gateway, a problem in remote registration of the M2M terminal is solved, thereby providing a beneficial effect of simplifying a network connection.

## Description

### Technical Field

The present invention relates to the field of communications, including, e.g., a method and a device for a gateway managing a terminal.

### Background

A Machine To Machine (M2M) communication network extends the communication scope and communication field of the existing information communication network. By embedding intelligent and communication capability in various possible objects, the information from the physical world is obtained, and the intelligence, the interaction and degree of automation of the existing information communication network service are enhanced and improved based on the analysis and processing of the information.

The M2M communication network is of multiple network forms, which may be an independently created separate physical network, and may also be logical networks created on the exiting public communication network and a various government and enterprise private network.

The M2M communication network may be divided into three layers from the perspective of logical functions, i.e., a perception extension layer, a network/service layer and an application layer.

The perception extension layer is mainly used to implement the collection, automatic identification and intelligent control of physical world information. Various objects in the physical world have no ability of communication itself. Intelligent nodes such as a sensor, an actuator, an intelligent device and a Radio Frequency Identification (RFID) reader/writer collect the information from the physical world, and perform information interaction with the network layer through a communication component. The main components that the perception extension layer contains include an M2M terminal, and an M2M gateway.

The network/service layer is used to support the transmission, route and control of the information of the perception extension layer, and provides support for the communication between people and things, things and things over the Internet of Things. In conjunction with the categorization of the Internet of Things, the network form specifically included by the network level includes a communication network, Internet, industrial network or the like. The main components that the network/service layer contains include an M2M platform.

The application layer contains various specific Internet of Things applications, including public services and industry services. The industry services may be industry public services provided to the public, and may also be industry dedicated services meeting specific application requirements in the industry. The public services are basic services provided as required by public universal requirements, such as intelligent homes, mobile payment or the like. The industry dedicated services are generally the services provided to meet the requirements of the industry itself and provided for the inside of the industry, such as a smart grid, an intelligent transportation, an intelligent environment or the like. Some industry services may also be provided to the public, such as the intelligent transportation, which is referred to as the public service. The main components that the application layer contains include an M2M application server.

The M2M gateway relays the M2M terminal to the connection between the M2M communication network service layer and the application layer. Some M2M terminals may only have the function of near field communication, in order to connect the wide area network, the access to the wide area network is needed to be implemented through the M2M gateway. Another typical requirement is to use the M2M gateway to implement network connection convergence and information convergence, which simplifies the network connection and corresponding management.

The M2M platform provides some common capabilities and supports to the M2M application, and provides an open interface, to enable the application to access and use the network resource and capability. The complexity of application development and deployment of top-level Internet of Things can be simplified and reduced through shielding the implementation of underlying specific network for the specific M2M application.

In the related art, the M2M terminal generally registers to the M2M platform or the M2M application server, to finish some services. But in practice, some services do not need remote registration, that is, the services do not need to be finished registration on the level of M2M platform or M2M network, and may be finished on the level of M2M gateway.

Currently, no effective solution has been proposed for the problem only in remote registration of the M2M terminal in the related art.

### Summary of the Invention

A method and a device for a gateway managing a terminal are provided in the embodiment of the present invention, so at least to solve the above problem.

According to one aspect of an embodiment of the present invention, a method for a gateway managing a terminal is provided, including that: an M2M gateway transmits an information request message to an M2M terminal requiring registration; and after the M2M gateway receives a message transmitted by the M2M terminal and responding to the information request message, the M2M gateway authenticates and verifies the M2M terminal.

According to an embodiment of the present invention, before the M2M gateway transmits the information request message to the M2M terminal requiring registration, the method further includes: the M2M gateway selects the M2M terminal requiring registration through an operation interface of the M2M gateway; or the M2M gateway connects with a computer, and the M2M gateway selects the M2M terminal requiring registration through the computer; or the M2M gateway connects with an intelligent terminal, and the M2M gateway selects the M2M terminal requiring registration through the intelligent terminal.

According to an embodiment of the present invention, after the M2M gateway authenticates and verifies the M2M terminal, based on that the authentication and the verification are successful, the method further includes that: the M2M gateway allocates an address and/or an identifier to the M2M terminal.

According to an embodiment of the present invention, after the M2M gateway allocates the address and/or the identifier to the M2M terminal, the method further includes that: the M2M gateway sets the state of the M2M terminal as successful local registration locally, and transmits a registration confirmation message to the M2M terminal, wherein the registration confirmation message indicates that the M2M terminal finishes local registration.

According to an embodiment of the present invention, the message responding to the information request message carries at least one of the following items: an M2M terminal identifier, a device description parameter of the M2M terminal, an application description parameter of the M2M terminal, an indication of supporting remote management, a key of the M2M terminal.

According to an embodiment of the present invention, after the M2M gateway authenticates and verifies the M2M terminal, the method further includes: the M2M gateway transmits a remote registration request to an M2M platform or an M2M application server.

According to an embodiment of the present invention, after the M2M gateway transmits the remote registration request to the M2M platform or the M2M application server, the method further includes that: the M2M gateway receives a remote registration confirmation message responded by the M2M platform or the M2M application server; and based on that the remote registration confirmation message indicates that the remote registration is successful, the M2M gateway sets the state of the M2M terminal as successful remote registration or successful remote and local registration, and transmits a registration confirmation message to the M2M terminal, wherein the registration confirmation message indicates that the M2M terminal finishes remote registration or finishes local and remote registration.

According to an embodiment of the present invention, after the M2M gateway transmits the remote registration request to the M2M platform or the M2M application server, the method further includes that: the M2M gateway receives a remote registration confirmation message responded by the M2M platform or the M2M application server; and based on that the remote registration confirmation message indicates that the remote registration is unsuccessful, the M2M gateway transmits the remote registration request message to the M2M platform or the M2M application server again after a predetermined waiting time is up, and based on that the number of unsuccessful remote registration reaches a predetermined maximum number of attempting to remote register, stops transmitting the remote registration request message.

According to another aspect of an embodiment of the present invention, a device for a gateway managing a terminal is provided, including: a transmitting component, configured to transmit an information request message to an M2M terminal requiring registration; and a verifying component, configured to, after receiving a message transmitted by the M2M terminal and responding to the information request message, authenticate and verify the M2M terminal.

According to an embodiment of the present invention, the transmitting component is further configured to transmit a remote registration request to an M2M platform or an M2M application server.

Through the embodiments of the present invention, an M2M gateway transmits an information request message to an M2M terminal requiring registration; and after the M2M gateway receives a message transmitted by the M2M terminal and responding to the information request message, the M2M gateway authenticates and verifies the M2M terminal, so that a problem only in remote registration of the M2M terminal is solved, thereby providing an effect of simplifying a network connection.

### Brief Description of the Drawings

The accompanying drawings described herein serve to provide a further understanding of the present invention, and constitute a part of this application. The schematic embodiments of the present invention and description thereof serve to explain the present invention rather than to limit the present invention inappropriately. In the drawings:
Fig. 1 is a flowchart of a method for a gateway managing a terminal according to an embodiment of the present invention;
Fig. 2 is a structural diagram of a device for a gateway managing a terminal according to an embodiment of the present invention; and
Fig. 3 is a flowchart of a method for a gateway managing a terminal according to a preferred embodiment of the present invention.

### Detailed Description of the Embodiments

Hereinafter, the present invention will be described in detail with reference to the accompanying drawings and in conjunction with the embodiments. It should be noted that the embodiments of the application and the features of the embodiments may be combined with each other without any conflict.

### Embodiment I

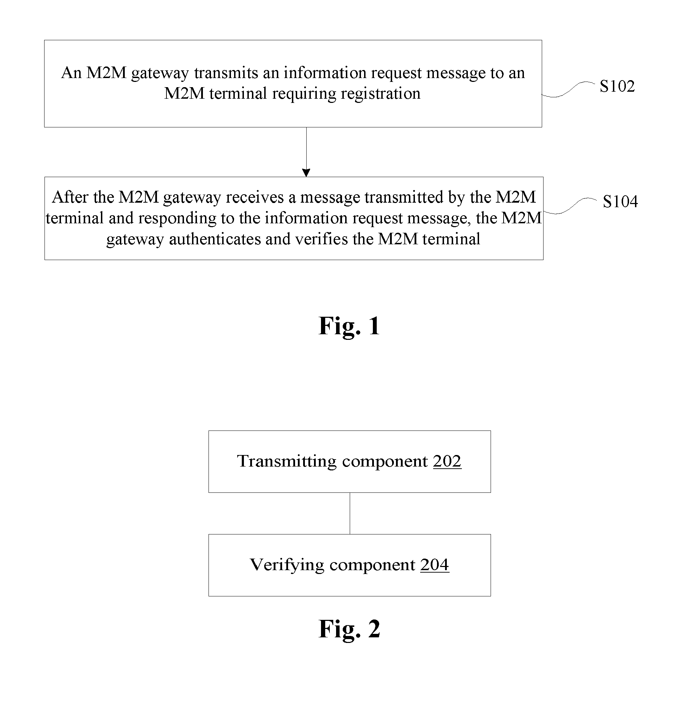

A method for a gateway managing a terminal is provided in the embodiment of the present invention. Fig. 1 is a flowchart of a method for a gateway managing a terminal according to an embodiment of the present invention. As shown in Fig. 1, the flow includes the following steps:
Step 102: an M2M gateway transmits an information request message to an M2M terminal requiring registration; and
Step 104: after the M2M gateway receives a message transmitted by the M2M terminal and responding to the information request message, the M2M gateway authenticates and verifies the M2M terminal.

Through the above steps, the M2M terminal may register on the M2M gateway to finish some services. The M2M terminal must be put into normal use after successful registration, that is, the M2M terminal needs to register to the M2M gateway to use corresponding M2M service. In the related art, the M2M terminal only registers remotely to finish relevant services. But in practice, some services do not need to be finished remotely, and only need to be finished on the level of M2M gateway. In the embodiment of the present invention, registration of the M2M terminal on the M2M gateway is implemented to finish some services, which simplifies the network connection and improves the service efficiency.

Before the M2M gateway transmits the information request message to the M2M terminal requiring registration, the M2M gateway may select the M2M terminal requiring registration. There are many ways for the M2M gateway selecting the M2M terminal requiring registration. Preferably, the M2M terminal requiring registration may be selected through an operation interface of the M2M gateway; a computer is connected to the M2M gateway, and the M2M terminal requiring registration is selected through the computer; or an intelligent terminal is connected to the M2M gateway, and the M2M terminal requiring registration is selected through the intelligent terminal. Through the above steps, the M2M gateway may operate the M2M terminal more conveniently.

After the M2M gateway authenticates and verifies the M2M terminal, the result of authentication and verification may be successful or may also be unsuccessful. Preferably, based on that the authentication and the verification are successful, the M2M gateway allocates an address and/or an identifier to the M2M terminal. Through the above step, it is possible to create the communication between the M2M gateway and the M2M terminal and the communication between the M2m terminals.

After the M2M gateway allocates the address and/or the identifier to the M2M terminal which is registered successfully, the M2M gateway sets locally the state of the M2M terminal as successful local registration locally, and transmits a registration confirmation message to the M2M terminal, wherein the registration confirmation message indicates that the M2M terminal finishes local registration. Through the above steps, the M2M gateway records the state of the M2M terminal locally, and the M2M gateway may perform some services according to the state of the M2M terminal.

The message transmitted by the M2M terminal responding to the information request message of the M2M gateway may carry many pieces of data, preferably may carry at least one of the following items: an M2M terminal identifier, a device description parameter of the M2M terminal, an application description parameter of the M2M terminal, an indication of supporting remote management, a key of the M2M terminal. The M2M gateway may perform corresponding operations through various parameters carried in the message. For example, the remote registration request may be transmitted according to the indication of supporting remote management, corresponding service operations may be performed according to at least one of the following: a device identifier of the M2M terminal, the device description parameter of the M2M terminal, the application description parameter of the M2M terminal, and authentication and verification may be performed according to the key of the M2M terminal.

After the M2M terminal is registered on the M2M gateway, the remote registration request may be transmitted to the M2M platform or the M2M application server to implement the remote registration. Based on that the M2M terminal is only registered on the M2M gateway, it is only possible to perform service operation on the level of the M2M gateway. Therefore, preferably remote registration may also be performed to implement the service operation on the level of the M2M platform or the M2M application server.

After the M2M gateway transmits the remote registration request to the M2M platform or the M2M application server, the M2M gateway receives the remote registration confirmation message responded by the M2M platform or the M2M application server. Based on that the remote registration confirmation message indicates successful remote registration, the state of the M2M terminal is set as successful remote registration or successful remote and local registration, and the registration confirmation message is transmitted to the M2M terminal, wherein the registration confirmation message indicates that the M2M terminal finishes remote registration or finishes local and remote registration. Based on that the remote registration confirmation message indicates unsuccessful remote registration, the M2M gateway transmits the remote registration request message to the M2M platform or the M2M application server again after a predetermined waiting time is up, and based on that the number of unsuccessful remote registration reaches the predetermined maximum number of attempting to remote register, stops transmitting the remote registration request message. Through the above steps, the state of remote registration and local registration of the M2M terminal may be determined, and different services may be performed according to the different states of the M2M terminal. For example, in a case of successful remote registration and unsuccessful local registration, the service on the level of the M2M platform or M2M application server is performed. In a case of unsuccessful remote registration and successful local registration, the service on the level of the M2M gateway is performed.

### Embodiment II

A device for a gateway managing a terminal is further provided in the embodiment of the present invention. The device is used to implement the above embodiments and preferred embodiments. What has been described is not repeated again here. As used below, term "component" may implement the combination of software and/or hardware of predetermined functions. Although the device described in the following embodiments is preferably implemented in software, it is possible and conceived that hardware, or a combination of software and hardware may be used for implementation.

Fig. 2 is a structural diagram of a device for a gateway managing a terminal according to an embodiment of the present invention. As shown in Fig. 2, the device includes: a transmitting component 202 and a verifying component 204.

The transmitting component 202 is configured to transmit an information request message to an M2M terminal requiring registration; and
the verifying component 204 is configured to, after receiving a message transmitted by the M2M terminal and responding to the information request message, authenticate and verify the M2M terminal.

Preferably, the transmitting component 202 is further configured to transmit a remote registration request to an M2M platform or an M2M application server.

In the preferred embodiments of the embodiments of the present invention, the device may implement the function of the method of Embodiment I through the above component or through setting a new component. Specifically, the embodiments of the present invention are not repeated again here.

### Embodiment III

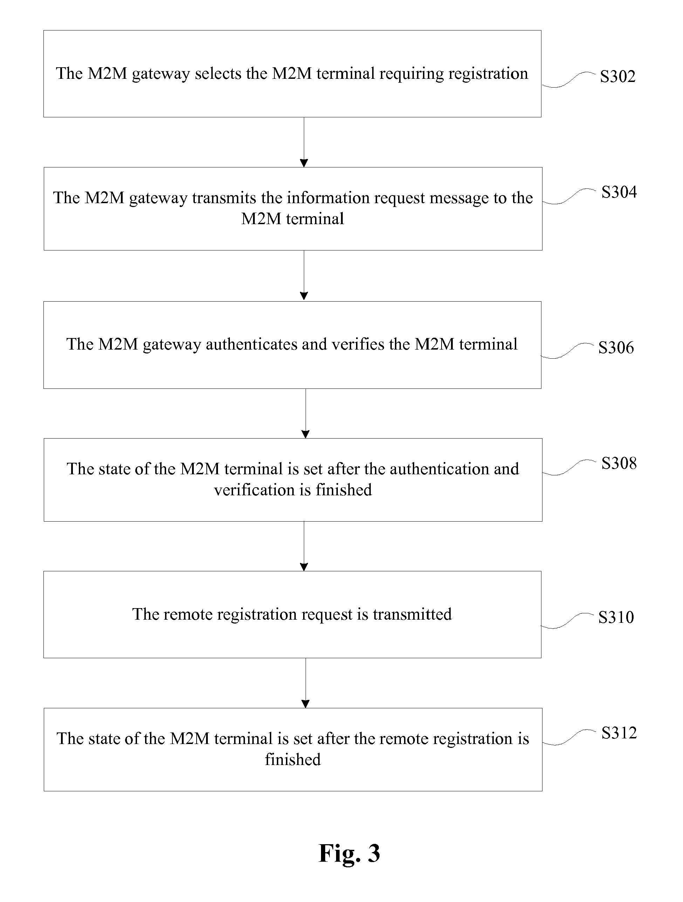

Fig. 3 is a flowchart of a method for a gateway managing a terminal according to a preferred embodiment of the present invention. As shown in Fig. 3, the flow includes the following steps.

Step 302: The M2M gateway selects the M2M terminal requiring registration.

Step 304: The M2M gateway transmits the information request message to the M2M terminal.

The M2M gateway verifies whether the selected M2M terminal is registered on the M2M gateway, that is, whether the selected M2M terminal is registered locally. Based on that the selected M2M terminal is registered locally, the registration confirmation message is transmitted to the M2M terminal, which indicates that the selected M2M terminal has been registered locally. Based on that the selected M2M terminal is not registered locally, the information request message is transmitted to the M2M terminal.

Step 306: The M2M gateway authenticates and verifies the M2M terminal.

After receiving the message transmitted by the M2M terminal and responding to the information request message of the M2M gateway, the M2M gateway authenticates and verifies the M2M terminal. The above response message may include at least one of the following items: an M2M terminal identifier, a device description parameter of the M2M terminal, an application description parameter of the M2M terminal, an indication of supporting remote management, a key of the M2M terminal.

Step 308: The state of the M2M terminal is set after the authentication and verification are finished.

After the authentication and verification are successful, the M2M gateway allocates the address and/or identifier to the M2M terminal, sets the state of the M2M terminal as "successful local registration", and stores the information of the M2M terminal. The M2M gateway transmits the registration confirmation message to the M2M terminal, which indicates that the local registration of the M2M terminal is finished.

Step 310: The remote registration request is transmitted.

The M2M gateway checks the information of the M2M terminal locally stored. Based on that the information of the M2M terminal locally stored includes the indication of supporting remote management, the remote registration request is transmitted to the M2M platform or the M2M application server.

Step 312: The state of the M2M terminal is set after the remote registration is finished.

After the M2M gateway receives the message responding to the remote registration request from the M2M platform or the M2M application server, based on that the remote registration request is successful, the state of the M2M terminal in the information of the M2M terminal stored locally is set as "successful remote and local registration" or "successful remote registration".

### Embodiment IV

A method for a gateway managing a terminal is further provided in the preferred embodiment of the present invention. The flow of the method is as shown in Fig. 3. The flow includes the following steps:
Step 302: The M2M gateway selects the M2M terminal requiring registration.

The M2M gateway may select the M2M terminal requiring registration through a user input instruction. Specifically, the M2M gateway may select the M2M terminal requiring registration through an operation interface of the gateway itself, or the M2M gateway may select the M2M terminal requiring registration through a personal computer which is connected to the M2M gateway, or the M2M gateway may select the M2M terminal requiring registration through an intelligent terminal which is connected to the M2M gateway.

Step 304: The M2M gateway transmits an information request message to the M2M terminal.

The M2M gateway verities whether the selected M2M terminal is registered on the M2M gateway, that is, whether the selected M2M terminal is registered locally. Based on that the selected M2M terminal is registered locally, the registration confirmation message is transmitted to the M2M terminal, which indicates that the selected M2M terminal has been registered locally. Based on that the selected M2M terminal is not registered locally, the information request message is transmitted to the M2M terminal.

Step 306: The M2M gateway authenticates and verifies the M2M terminal.

After receiving the message transmitted by the M2M terminal and responding to the information request message of the M2M gateway, the M2M gateway authenticates and verifies the M2M terminal. The above response message may include at least one of the following items: an M2M terminal identifier, a device description parameter of the M2M terminal, an application description parameter of the M2M terminal, an indication of supporting remote management, a key of the M2M terminal.

Step 308: The state of the M2M terminal is set after the authentication and verification is finished.

After the authentication and verification are successful, the M2M gateway allocates the address and/or identifier to the M2M terminal, sets the state of the M2M terminal as "successful local registration", and stores the related information of the M2M terminal. The M2M gateway transmits the registration confirmation message to the M2M terminal, which indicates that the local registration of the M2M terminal is finished.

Step 310: The remote registration request is transmitted.

The M2M gateway checks the information of the M2M terminal locally stored. Based on that the information of the M2M terminal locally stored includes the indication of supporting remote management, the remote registration request is transmitted to the M2M platform or the M2M application server.

Step 312: The state of the M2M terminal is set after the remote registration is finished.

The M2M gateway receives the message transmitted by the M2M platform or the M2M application server to respond to the remote registration request.

Based on that the remote registration is successful, the state of the corresponding M2M terminal in the information of the M2M terminal stored locally is set as "successful remote and local registration" or "successful remote registration". Meanwhile, the M2M gateway may further transmit the registration confirmation message to the M2M terminal, which indicates that the M2M terminal have finished remote registration. Of course, the step is not necessary, because when the remote management operation is executed, the M2M application server or the M2M platform may acquire the information about whether the M2M terminal is remotely registered successfully from the information of the M2M terminal stored by the M2M gateway.

Based on that the registration is unsuccessful, the remote registration request is transmitted to the M2M platform or M2M application server again after a predetermined waiting time is up. In a case that the number of unsuccessful remote registration reaches a predetermined maximum number of attempting to remote register, the remote registration request message is stopped to transmit, and the state of the M2M terminal is set as successful local registration and unsuccessful remote registration or unsuccessful remote registration. The M2M gateway may further transmit the registration confirmation message to the M2M terminal, which indicates that the remote registration of the M2M terminal is unsuccessful.

It can be seen from the above description that the embodiments of the present invention implement the following effects: by registering the M2M terminal on the M2M gateway, the service operation on the level of the M2M gateway is finished, thereby achieving the effect of simplifying the network connection and improving the service implementation efficiency.

Obviously, those skilled in the art should understand that each of the mentioned components or steps of the present invention may be achieved by a universal computing apparatus; the components or steps may be integrated on a single computing apparatus, or distributed in a network formed by multiple computing apparatuses. Selectively, they may be achieved by a program code which may be executed by the computing apparatus. Thereby, the components or steps may be stored in a storage apparatus and executed by the computing apparatus, and in some cases, the steps shown or described may be executed in an order different from here, or may be respectively manufactured as each integrated circuit component, or multiple components or steps thereof may be manufactured as single integrated circuit component. In this way, the present invention is not limited to any particular combination of hardware and software.

The above are only the preferred embodiments of the present invention and are not intended to limit the present invention, for those skilled in the art, various changes and variations may be made to the present invention. Any modifications, equivalent replacements, improvements and the like within the spirit and principle of the present invention shall be contained within the scope of protection of the claims of the present invention.

### Industrial Applicability

The technical schemes provided by the embodiments of the present invention may be applied to the field of network communication, by which the problem only in remote registration of the M2M terminal is solved, by registering the M2M terminal on the M2M gateway, the service operation of the M2M gateway level is finished, simplifying the network connection, and improving the service implementation efficiency.

## Claims

1. A method for gateway managing terminal, **characterized by** comprising:
transmitting, by a Machine To Machine (M2M) gateway, an information request message to an M2M terminal requiring registration; and
after the M2M gateway receives a message transmitted by the M2M terminal and responding to the information request message, authenticating and verifying, by the M2M gateway, the M2M terminal.

2. The method according to claim 1, **characterized in that** before transmitting, by the M2M gateway, the information request message to the M2M terminal requiring registration, further comprising:
selecting the M2M terminal requiring registration through an operation interface of the M2M gateway; or
connecting a computer to the M2M gateway, and selecting the M2M terminal requiring registration through the computer; or
connecting an intelligent terminal to the M2M gateway, and selecting the M2M terminal requiring registration through the intelligent terminal.

3. The method according to claim 1, **characterized in that** after authenticating and verifying the M2M terminal, based on that an authentication and a verification are successful, further comprising: allocating, by the M2M gateway, an address and/or an identifier to the M2M terminal.

4. The method according to claim 3, **characterized in that** after the M2M gateway allocates the address and/or the identifier to the M2M terminal, further comprising:
setting, by the M2M gateway, the state of the M2M terminal as successful local registration locally, and transmitting a registration confirmation message to the M2M terminal, wherein the registration confirmation message indicates that the M2M terminal finishes local registration.

5. The method according to any one of claims 1 to 4, **characterized in that** the message responding to the information request message carries at least one of the following items: an M2M terminal identifier, a device description parameter of the M2M terminal, an application description parameter of the M2M terminal, an indication of supporting remote management, a key of the M2M terminal.

6. The method according to claim 1, **characterized in that** after authenticating and verifying the M2M terminal, further comprising:
transmitting, by the M2M gateway, a remote registration request to an M2M platform or an M2M application server.

7. The method according to claim 6, **characterized in that** after the M2M gateway transmits the remote registration request to the M2M platform or the M2M application server, further comprising:
receiving, by the M2M gateway, a remote registration confirmation message responded by the M2M platform or the M2M application server; and
based on that the remote registration confirmation message indicates that a remote registration is successful, setting the state of the M2M terminal as successful remote registration or successful remote and local registration, and transmitting a registration confirmation message to the M2M terminal, wherein the registration confirmation message indicates that the M2M terminal finishes remote registration or finishes local and remote registration.

8. The method according to claim 6, **characterized in that** after the M2M gateway transmits the remote registration request to the M2M platform or the M2M application server, further comprising:
receiving, by the M2M gateway, a remote registration confirmation message responded by the M2M platform or the M2M application server; and
based on that the remote registration confirmation message indicates that a remote registration is unsuccessful, transmitting, by the M2M gateway, the remote registration request message to the M2M platform or the M2M application server again after a predetermined waiting time is up, and based on that the number of unsuccessful remote registration reaches a predetermined maximum number of attempting to remote register, stopping transmitting the remote registration request message.

9. A device for a gateway managing terminal, **characterized by** comprising:
a transmitting component, configured to transmit an information request message to an M2M terminal requiring registration; and
a verifying component, configured to, after receiving a message transmitted by the M2M terminal and responding to the information request message, authenticate and verify the M2M terminal.

10. The device according to claim 9, **characterized in that** the transmitting component is further configured to transmit a remote registration request to an M2M platform or an M2M application server.
